# EUROPÄISCHE PATENTANMELDUNG

(11) **EP 4 818 084 A1**
(43) Veröffentlichungstag der Anmeldung: **07.10.2026**
(21) Anmeldenummer: 26162728.5
(22) Anmeldetag: 05.03.2026
(51) Int. Cl.: B65G 27/04, B07B 1/46, B07B 13/04, B65G 47/14, B65G 47/256

(54) **SORTIEREINRICHTUNG FÜR EIN BEVORRATUNGSSYSTEM UND BEVORRATUNGSSYSTEM MIT SORTIEREINRICHTUNG**

(30) Priorität: 02.04.2025 DE 102025112996; 11.06.2025 DE 102025122706
(71) Anmelder: SorTec Pharma Sortiertechnik GmbH, 74549 Wolpertshausen (DE)
(72) Erfinder: Eisenmann, Günter, 74532 Ilshofen (DE); Ottenwälder, Thomas, 74597 Stimpfach (DE)
(74) Vertreter: Patentanwälte Ruff, Wilhelm, Beier, Dauster & Partner mbB

(57) **Zusammenfassung**

Der Gegenstand der vorliegenden Erfindung betrifft eine Sortiereinrichtung (6) für ein Bevorratungssystem (1) für Kleinteile, insbesondere für Verschlusselemente, wobei die Sortiereinrichtung (6) ausgebildet ist, um aneinander anhaftende Kleinteile voneinander zu trennen und/oder aneinander anhaftenden Kleinteile auszusortieren. Zudem betrifft der Gegenstand der vorliegenden Erfindung ein Bevorratungssystem (1) für Kleinteile, insbesondere für Verschlusselemente, mit mindestens einer Sortiereinrichtung.

## Beschreibung

### ANWENDUNGSGEBIET UND STAND DER TECHNIK

Die Erfindung betrifft eine Sortiereinrichtung für ein Bevorratungssystem für Kleinteile, insbesondere für Verschlusselemente, beispielsweise für Stopfen. Zudem betrifft die Erfindung ein Bevorratungssystem für Kleinteile mit einer Sortiereinrichtung.

Bevorratungssysteme für Kleinteile, insbesondere für Verschlusselemente, beispielsweise für Stopfen sind aus dem Stand der Technik bekannt.

Als Stopfen werden insbesondere Verschlusselemente für Behälter, beispielsweise für pharmazeutische Behälter, wie Vials, Spritzen, Karpulen oder Ampullen bezeichnet, durch welche die Behälter verschlossen werden. Die Stopfen werden insbesondere in die Behälter eingesetzt. Die Stopfen sind beispielsweise aus Kunststoff. Insbesondere für pharmazeutische Anwendungen sind bestimmte Materialien für die Herstellung der Stopfen vorgesehen.

### AUFGABE UND LÖSUNG

Es sind Aufgaben der Erfindung, eine verbesserte Sortiereinrichtung sowie ein verbessertes Bevorratungssystem für Kleinteile zu schaffen.

Gemäß einem ersten Aspekt wird eine Sortiereinrichtung für ein Bevorratungssystem für Kleinteile, insbesondere für Verschlusselemente, geschaffen, wobei die Sortiereinrichtung ausgebildet ist, um aneinander anhaftende Kleinteile voneinander zu trennen und/oder aneinander anhaftenden Kleinteile auszusortieren.

Die Sortiereinrichtung ist ausgebildet um Kleinteile, insbesondere in Form von Stopfen, Verschlüssen und dergleichen, vereinzelt an einem Auslauf eines Bevorratungssystems für anschließendes Zuführsystem bereitzustellen. Die Kleinteile, insbesondere die Stopfen, weisen in Ausgestaltungen zumindest einen zylindrischen oder konischen Abschnitt auf, welcher in Behälter für ein Verschließen eingesetzt wird. Der zylindrische oder konische Abschnitt ragt in Ausgestaltungen von einem Kopfteil oder Kopfabschnitt ab. Andere Formen des von dem Kopfteil abragenden Abschnitts sind möglich. In Ausgestaltungen weisen die Stopfen kein Kopfteil auf. Die Kleinteile sind beispielsweise um eine sich in Längsrichtung des Kleinteils erstreckende Rotationsachse rotationssymmetrisch ausgebildet. In Ausgestaltungen sind die Kleinteile aus Gummi, Kautschuk oder Kunststoff ausgebildet. Beispielsweise sind die Kleinteile aus einem für Packmittel für pharmazeutische Produkte zulässigem Material, insbesondere aus Kunststoff.

Die Kleinteile werden insbesondere als Schüttgut dem Bevorratungssystem zugeführt.

Die Sortiereinrichtung ist zum Vereinzeln und/oder Aussortieren aneinander anhaftender Elemente der als Schüttgut zugeführten oder in dem Bevorratungssystem bevorrateten Kleinteile ausgebildet. Als Schüttgut sind die Kleinteile ungeordnet bevorratet oder werden ungeordnet aus einem Vorratsbehälter des Bevorratungssystems abgeführt. Dabei können zwei oder mehrere Kleinteile aneinander anhaften. Aneinander anhaftende Kleinteile werden auch als verklebte Kleinteile bezeichnet. Insbesondere neigen Kleinteile aus Kunststoffen zu einem anhaften oder "verkleben". Verklebte Kleinteile können zu Störungen in einem Prozessablauf an einer die Kleinteile einsetzenden Anlage führen.

Das Anhaften zumindest zweier Kleinteile kann an unterschiedlichen Stellen der Kleinteile erfolgen. Beispielsweise können die Kleinteile seitlich aneinander angrenzend und/oder an oder an Enden eines zylindrischen Kleinteils aneinander anhaften. Sofern vorhanden, können die Kleinteile auch an Kopfteilen aneinander anhaften. Die Ausrichtung und/oder Orientierung der anhaftenden Kleinteile ist unregelmäßig, wobei einzelne Kleinteile auch vereinzelt, aber in ihrer Orientierung undefiniert sind. Die anhaftenden zwei oder mehr Kleinteile können ebenfalls in ihrer gemeinsamen Orientierung undefiniert und somit unterschiedlich sein.

Durch die Sortiereinrichtung, welche ausgebildet ist, die Kleinteile zu vereinzeln und/oder verklebte Kleinteile auszusortieren, kann eine Anzahl an verklebten Kleinteilen an einem Auslauf reduziert werden. Insbesondere kann in Ausgestaltungen eine Abgabe aneinander anhaftender Kleinteile an einem Auslauf des Bevorratungssystems vermieden werden. Insbesondere wird durch die Sortiereinrichtung eine erhöhte Ausbringleistung und/oder eine Fehlerreduktion an der nachfolgenden Zuführeinrichtung erzielt.

In Ausgestaltungen sind mehrere Sortiereinrichtungen vorgesehen. Die Sortiereinrichtung ist in Ausgestaltungen derart ausgebildet, dass diese sich nachträglich an bekannten Bevorratungssystemen anbringen lässt und/oder zu Wartungs- und/oder Reinigungszwecken, beispielsweise für ein Autoklavieren, einfach, insbesondere werkzeuglos, entnehmen und wieder anbringen lässt.

Die Sortiereinrichtung ist ausgebildet, dass diese einerseits vereinzelte Kleinteile zu anschließenden Einrichtungen passieren lässt und/oder nicht vereinzelte Kleinteile nicht passieren lässt oder die Transportwege der vereinzelten Kleinteile und der nicht vereinzelten Kleinteile trennt.

In Ausgestaltungen ist vorgesehen, dass die Sortiereinrichtung eine Begrenzungseinrichtung umfasst, wobei die Begrenzungseinrichtung einen Spalt begrenzt. Der Spalt ist in Ausgestaltungen dimensioniert, um ein Eintreten vereinzelter Kleinteile, insbesondere Verschlusselemente, beispielsweise Stopfen, in den Spalt zu erlauben und/oder um ein Eintreten aneinander anhaftender Kleinteile, insbesondere Verschlusselemente, beispielsweise Stopfen, zu verhindern.

In Ausgestaltungen ist vorgesehen, dass die die Sortiereinrichtung eine Trenneinrichtung aufweist, wobei die Trenneinrichtung mindestens eine Durchgangsöffnung aufweist, insbesondere zwei oder mehr Durchgangsöffnung, beispielsweise eine Vielzahl an Durchgangsöffnungen. Die Trenneinrichtung weist insbesondere eine Förderfläche auf, wobei die mindestens eine Durchgangsöffnung an der Förderfläche ausgebildet ist. Die Trenneinrichtung ist zwischen einem Vorrat und einer Förderrinne des Bevorratungssystems angeordnet. Die Trenneinrichtung wird auch als Siebeinrichtung bezeichnet.

Der Spalt ist in Ausgestaltungen zwischen der Trenneinrichtung und der Begrenzungseinrichtung ausgebildet. Die Begrenzungseinrichtung ist von der seitlichen Begrenzung, die insbesondere als Seitenwandung ausgebildet ist, zu unterscheiden. Während die seitliche Begrenzung seitlich an einem Einlauf, einer Förderfläche und/oder einem Schlechtauslauf angeordnet ist und jeweils quer davon abragt, ist die Begrenzungseinrichtung unterhalb und/oder oberhalb der Förderfläche, das heißt auf der für die Zufuhr vorgesehenen abgewandten Seite oder der für die Zufuhr vorgesehenen zugewandten Seite in einem Abstand zu der Förderfläche angeordnet. Der Abstand der Begrenzungseinrichtung, insbesondere eines plattenförmigen Abschnitts der Begrenzungseinrichtung, zu der Unterseite und/oder der Oberseite der Trenneinrichtung, ist derart bemessen, dass dieser etwa der größten Erstreckung eines zu vereinzelnden Kleinteils entspricht.

Eine an der Oberseite der Trenneinrichtung angeordnete Begrenzungseinrichtung ist stromaufwärts der mindestens einen Durchgangsöffnung angeordnet. Insbesondere ist die Begrenzungseinrichtung derart bemessen, dass nur vereinzelte Kleinteile über die Begrenzungseinrichtung zu der Durchgangsöffnung gelangen.

Eine an der Unterseite der Trenneinrichtung angeordnete Begrenzungseinrichtung ist stromabwärts der mindestens einen Durchgangsöffnung angeordnet. Bei einer an der Unterseite der Trenneinrichtung angeordneten Begrenzungseinrichtung ist verhindert, dass beispielsweise zwei in der größten Erstreckung aneinander anhaftende Kleinteile, die aber definiert orientiert sind, durch die jeweilige Durchgangsöffnung der Trenneinrichtung gelangen können. Vielmehr verhindert die Begrenzung ein Passieren derart verklebter oder anhaftender Kleinteile so lange, bis diese voneinander getrennt sind. Beispielsweise erfolgt ein Trennen eines in Richtung der Begrenzungseinrichtung von der Trenneinrichtung abragenden Kleinteils von einem daran anhaftenden Kleinteil durch ein Zusammenwirken mit weiteren Kleinteilen, welche in dem Spalt in Richtung eines Auslaufs bewegt werden. Nach dem Trennen der Kleinteile, können die zwei oder mehr Kleinteile jeweils die Durchgangsöffnung passieren, in den Spalt zwischen Begrenzungseinrichtung und Trenneinrichtung gelangen und weiter transportiert werden.

Bei einer an der Oberseite der Trenneinrichtung angeordneten Begrenzungseinrichtung ist auf diese Weise erzielt, dass nur vereinzelte Kleinteile zu der nachfolgend zu dem Spalt angeordnete Durchgangsöffnung gelangen.

Die Durchgangsöffnungen sind in Ausgestaltungen dimensioniert, um ein Passieren vereinzelter Kleinteile, insbesondere Verschlusselemente, beispielsweise Stopfen, zu erlauben und/oder um aneinander anhaftende Kleinteile insbesondere Verschlusselemente, beispielsweise Stopfen, voneinander zu trennen und/oder aneinander anhaftenden Kleinteile insbesondere Verschlusselemente, beispielsweise Stopfen, zurückzuhalten. Die zurückgehaltene Elemente können nachfolgend stromabwärts angeordnete Durchgangsöffnungen passieren. Zurückgehaltene Elemente, welche keine Durchgangsöffnung passieren, können ausgeschleust werden. In Ausgestaltungen werden die Kleinteile als Schüttgut der Sortiereinrichtung, hier einer Seite der Trenneinrichtung, zugeführt, beispielsweise aus einem Vorratsbehälter des Bevorratungssystems. Die Durchgangsöffnungen sind in Ausgestaltungen dimensioniert, dass diese ein Passieren lediglich für vereinzelte, und beispielsweise zudem definiert orientierte Kleinteile erlauben. Nicht vereinzelte, zusammenklebende Kleinteile können - unabhängig von der Anordnung der Kleinteile miteinander - die Trenneinrichtung, genauer deren Durchgangsöffnungen, nicht passieren. Derartige verklebte und/oder undefiniert orientierte Kleinteile verbleiben auf der Seite der Sortiereinrichtung bzw. Trenneinrichtung, bis diese vereinzelt, definiert und/oder aussortiert werden. Die vereinzelten, und beispielsweise definiert orientierten Kleinteile passieren die Durchgangsöffnungen der Trenneinrichtung und gelangen auf der Seite, welche der Seite für die Zufuhr gegenüberliegt, aus der Sortier- bzw. Trenneinrichtung heraus. Die Durchgangsöffnungen können in einem Muster zueinander angeordnet sein. Vorzugsweise sind die benachbarten Durchgangsöffnungen äquidistant zueinander angeordnet. In Ausgestaltungen sind zumindest zwei benachbarte Durchgangsöffnungen nicht äquidistant zueinander angeordnet.

In Ausgestaltungen ist vorgesehen, dass die Trenneinrichtung eine die mindestens eine Durchgangsöffnung aufweisende, insbesondere die Durchgangsöffnungen aufweisende, Förderfläche aufweist. In Ausgestaltungen weist die Trenneinrichtung weiter einen Einlauf aufweist, wobei insbesondere der Einlauf in einem Winkel zu der Förderfläche angeordnet ist und eine Rutsche zu der Förderfläche bildet. Förderfläche und Einlauf sind bevorzugt einteilig miteinander verbunden, können aber auch mehrteilig ausgebildet sein. Der Einlauf weist vorzugsweise keine Durchgangsöffnungen auf. Die Förderfläche weist vorzugsweise die mindestens eine Durchgangsöffnung, beispielsweise die Durchgangsöffnungen auf.

Vorzugsweise weist die Trenneinrichtung zumindest im Bereich der Förderfläche, in Ausgestaltungen im Bereich der Förderfläche und des Einlaufs, eine seitliche Begrenzung, insbesondere in Form von einer Seitenwandung auf. Die Begrenzung verhindert ein seitliches Herausfallen der Kleinteile aus der Trenneinrichtung. Bevorzugt ist die Begrenzung, genauer die Seitenwandung, zur Ausbildung eines Schlechtauslaufs an einer Stelle unterbrochen. Bevorzugt ist die Unterbrechung betrachtet in Förderrichtung der Kleinteile hinter oder nachgeschaltet zu der Förderfläche ausgebildet. Der Einlauf ist in Förderrichtung vor der Förderfläche angeordnet. Die Begrenzung, der Einlauf, die Förderfläche und der Schlechtauslauf sind in Ausgestaltungen einteilig miteinander verbunden ausgebildet. In anderen Ausgestaltungen ist zumindest der Einlauf, die Förderfläche, der Schlechtauslauf und/oder die Begrenzung separat ausgebildet und/oder mit dem jeweils anderen Abschnitt verbindbar verbunden.

In Ausgestaltungen ist vorgesehen, dass die Begrenzungseinrichtung in einer Gebrauchsausrichtung der Sortiereinrichtung unterhalb der Trenneinrichtung angeordnet ist. Unterhalb bedeutet zugewandt zu einer Seite, die gegenüber der für die Zufuhr vorgesehenen Seite liegt oder auch in Transportrichtung der vereinzelten, Kleinteile nachgeschaltet zu der Trenneinrichtung. In Ausgestaltungen kann eine Begrenzungseinrichtung zusätzlich oder alternativ auf der für die Zufuhr vorgesehenen Seite vorgesehen sein, um so eine Zufuhr von verklebten Kleinteilen mit einer eine bestimmte Größe überschreitenden Höhe zu verhindern oder zumindest zu reduzieren. Die Begrenzungseinrichtung ist derart angeordnet, dass diese ein Durchtreten nicht vereinzelter Kleinteile durch die Durchgangsöffnungen der Trenneinrichtung und/oder den Spalt verhindert.

In Ausgestaltungen ist vorgesehen, dass die Begrenzungseinrichtung in einer Gebrauchsausrichtung der Sortiereinrichtung oberhalb der Trenneinrichtung angeordnet ist. Ein durch die Begrenzungseinrichtung gebildeter Spalt ist insbesondere in Fördereinrichtung stromaufwärts der mindestens einen Durchgangsöffnung angeordnet, sodass Kleinteile nur über den Spalt zu der Durchgangsöffnung gelangen können. Die Begrenzungseinrichtung ist insbesondere derart angeordnet, dass diese eine Durchgangsöffnung unter Bildung eines Spalts abdeckt, sodass Kleinteile nur über einen zwischen der Begrenzungseinrichtung und der Trenneinrichtung gebildeten Spalt zu der Durchgangsöffnung gelangen können. Nicht vereinzelte, beispielsweise verklebte, Kleinteile können den Spalt nicht passieren und werden zurückgehalten. In Ausgestaltungen wird durch nachfolgende Kleinteile eine Kraft auf zurückgehaltene, verklebte Kleinteile aufgebracht, welche eine Trennung verklebter Kleinteile für ein Passieren des Spalts bewirkt. In Ausgestaltungen ist eine Breite der Begrenzungseinrichtung quer zu einer Förderrichtung der Kleinteile kleiner ist als eine Breite der Trenneinrichtung. Kleinteile, welche den Spalt nicht passieren, können dabei seitlich die Begrenzungseinrichtung passieren. Kleinteile, welche die Begrenzungseinrichtung passieren, gelangen nicht zu einer stromabwärts der Begrenzungseinrichtung angeordneten Durchgangsöffnung der Trenneinrichtung und damit nicht zu einer Förderrinne. In Ausgestaltungen weist die Trenneinrichtung mindestens eine weitere Durchgangsöffnung auf, wobei stromaufwärts der Durchgangsöffnung einer weitere Begrenzungseinrichtung vorgesehen ist. Kleinteile, welche nicht einen durch eine Begrenzungseinrichtung gebildeten Spalt passieren, gelangen nicht zu der Förderrinne. Diese Kleinteile können beispielsweise ausgeschleust werden.

In Ausgestaltungen ist vorgesehen, dass die Trenneinrichtung einen Schlechtauslauf aufweist. In Ausgestaltungen weist der Schlechtauslauf in eine von der Förderrichtung abweichende Richtung und/oder ist in einer von einer Förderrinne abweichende Ebene angeordnet. Beispielsweise ist der Schlechtauslauf quer zu einer Förderrichtung der Kleinteile entlang der Durchgangsöffnungen angeordnet. Kleinteile, welche die Trenneinrichtung nicht passieren, da diese aneinanderkleben, werden über einen Schlechtauslauf abgeführt. Hierdurch wird verhindert, dass diese auszusortierenden Kleinteile sich an der Trenneinrichtung ansammeln und insbesondere die Durchgangsöffnungen der Trenneinrichtung blockieren.

Gemäß einem weiteren Aspekt der Erfindung wird ein Bevorratungssystem für Kleinteile, insbesondere für Verschlusselemente, mit einer hier beschriebenen Sortiereinrichtung geschaffen. Das Bevorratungssystem ist zum Bevorraten von als Schüttgut angelieferten Kleinteilen, insbesondere für Verschlusselemente mit einem zylindrischen oder konischen Abschnitt, beispielsweise für Stopfen ausgebildet. Die Kleinteile sind beispielsweise aus einem Kunststoff, welcher zu einem anhaften der Kleinteile neigt. Das Bevorratungssystem ist aber auch für Kleinteile aus anderen Materialien einsetzbar.

In Ausgestaltungen ist vorgesehen, dass das Bevorratungssystem einen Vorratsbehälter und eine Förderrinne umfasst, wobei die Sortiereinrichtung in Förderrichtung der Förderrinne zwischen dem Vorratsbehälter und der Förderrinne angeordnet ist, wobei insbesondere die Sortiereinrichtung in einer Gebrauchsausrichtung oberhalb der Förderinne angeordnet ist. In dem Vorratsbehälter werden die als Schüttgut angelieferten oder bereitgestellten Kleinteile bevorratet. Der Vorratsbehälter weist bevorzugt einen Boden und eine seitliche Wandung auf, um die Kleinteile zu bevorraten. Der Boden weist bevorzugt eine Zuführfläche auf, über welche die Kleinteile aus dem Vorratsbehälter weiteren, nachgeschalteten Einrichtungen, wie beispielsweise der Sortiereinrichtung zugeführt werden können. Die Zuführfläche ist beispielsweise als eine relativ bewegbare Bodenausnehmung ausgebildet. **In** anderen Ausgestaltungen ist die Zuführfläche als Rutsche, insbesondere als relativ unbewegbare Rutsche ausgebildet. Über eine Bodenöffnung gelangen die Kleinteile auf die Zuführfläche und von dort auf in Förderrichtung nachgeschaltete Einrichtungen. Zudem weist das Bevorratungssystem eine Förderrinne oder mehrere Förderrinnen auf, über welche die Kleinteile aus dem Bevorratungssystem zu dem Bevorratungssystem nachgeschalteten Einrichtungen gelangen können. Die jeweilige Förderrinne kann ein an die Kleinteile angepassten Querschnitt aufweisen. Zudem weist das Bevorratungssystem die Sortiereinrichtung auf. Die Sortiereinrichtung ist in Transportrichtung der Kleinteile zwischengeschaltet zu dem Vorratsbehälter und der Förderrinne bzw. den Förderrinnen angeordnet. Auf diese Weise ist sichergestellt, dass jedes Kleinteil aus dem Vorratsbehälter vor Erreichen der Förderrinne und etwaigen nachgeschalteten Einrichtungen die Sortiereinrichtung passieren muss. Kleinteile, welche die Sortiereinrichtung nicht in die vorgesehene Transportrichtung verlassen, die also in der Sortiereinrichtung verbleiben oder über den Schlechtauslauf wegtransportiert werden, gelangen nicht zu der Förderrinne und etwaigen nachgeschalteten Einrichtungen. Um einen möglichst einfachen, energiesparenden Transport zu gewährleisten, befinden sich der Vorratsbehälter, genauer dessen Boden, die Sortiereinrichtung und die Förderrinne auf unterschiedlichen Höhenniveaus. Dabei weist der Vorratsbehälter das höchste Höhenniveau auf und die Förderrinne das niedrigste Höhenniveau. Die Sortiereinrichtung ist dazwischen auf einem dazwischenliegenden Höhenniveau angeordnet. Für einen Transport der Kleinteile von dem Vorratsbehälter zu der mindestens einen Förderrinne kann somit die Schwerkraft zumindest unterstützend genutzt werden. Die Anordnung entspricht der Anordnung in einem Gebrauchszustand.

Neben der Schwerkraft kann das Bevorratungssystem weitere Antriebseinrichtungen oder Aktuatoren, kurz Antriebe aufweisen. Ein Antrieb ist beispielsweise mit der Förderrinne und/oder der Sortiereinrichtung in Wirkverbindung. In Ausgestaltungen ist ein Antrieb mit der Förderrinne in Wirkverbindung verbunden und die Sortiereinrichtung ist in Wirkverbindung mit der Förderrinne verbunden. Dabei ist der Antrieb als ein Antrieb ausgestaltet, der die Förderrinne in Schwingungen für eine Bewegung der Kleinteile in einer Förderrichtung versetzt. Die Schwingbewegung wird auf die Sortiereinrichtung übertragen. Über die Schwingbewegung wird die Trennfunktion der Sortiereinrichtung zum Vereinzeln der Kleinteile unterstützt.

In Ausgestaltungen ist vorgesehen, dass die Sortiereinrichtung an der Förderrinne angebracht ist. Vorzugsweise ist die Sortiereinrichtung lösbar an der Förderrinne angebracht. In Ausgestaltungen ist die Sortiereinrichtung unlösbar an der Förderrinne angebracht. **In** bevorzugten Ausgestaltungen ist die Sortiereinrichtung über Verbindungsmittel, beispielsweise Laschen, Schrauben, Vorsprünge, Ausnehmungen und andere Kopplungselemente und dergleichen an der Förderrinne angeordnet. Dabei ist die Sortiereinrichtung vorzugsweise auf einer Seite der Förderrinne angeordnet, die gegenüber der Seite liegt, an der der Antrieb mit der Förderrinne in Wirkverbindung steht.

In Ausgestaltungen ist vorgesehen, dass die Sortiereinrichtung eine Trenneinrichtung und/oder eine Begrenzungseinrichtung umfasst. Die Begrenzungseinrichtung ist in Ausgestaltungen zwischen der Trenneinrichtung und der Förderrinne angeordnet. Die Begrenzungseinrichtung ist in Ausgestaltungen in Transportrichtung der Kleinteile zwischen dem Vorratsbehälter und der Förderrinne zwischengeschaltet. Die Begrenzungseinrichtung ist in Ausgestaltungen an einer von der Förderrinne abgewandten Seite der Trenneinrichtung angeordnet, insbesondere stromaufwärts einer Durchgangsöffnung der Trenneinrichtung.

Das Sortieren und/oder Trennen der Kleinteile erfolgt bevorzugt gemäß folgendem Verfahren. Es werden in einem ersten Schritt Kleinteile bereitgestellt. Diese werden bevorzugt als Schüttgut bereitgestellt. Das Bereitstellen kann auf beliebige Weise erfolgen. Bevorzugt erfolgt das Bereitstellen über das hier beschriebene Bevorratungssystem, insbesondere über den Vorratsbehälter. Die bereitgestellten Kleinteile werden in einem nachfolgenden Schritt der Sortiereinrichtung zugeführt. In der Sortiereinrichtung werden die Kleinteile getrennt und somit vereinzelt und beispielsweise einer Förderrinne zugeführt. Die nicht vereinzelten Kleinteile werden insbesondere über einen Schlechtauslauf aussortiert. Um ein Trennen zu unterstützen, wird die Fördereinrichtung in Schwingung versetzt. Dies erfolgt bevorzugt über den Antrieb. Um zu verhindern, dass verklebte Kleinteile durch Durchgangsöffnungen der Sortiereinrichtung gelangen, wird der Durchlass durch die Durchgangsöffnungen der Sortiereinrichtung mittels einer Begrenzeinrichtung begrenzt. Die Begrenzung erfolgt in Ausgestaltungen derart, dass nur vereinzelte Kleinteile die Durchgangsöffnungen passieren und in einen Spalt zwischen Förderfläche und Begrenzungseinrichtung gelangen. Aus dem Spalt werden die vereinzelten Kleinteile einer Förderrinne zugeführt. In Ausgestaltungen erfolgt die Begrenzung derart, dass nur vereinzelte Kleinteile, welche eine durch Begrenzungseinrichtung begrenzten Spalt passieren, zu Durchgangsöffnungen der Trennfläche und damit zu der Förderrinne gelangen. Der Transport der Kleinteile erfolgt über die Schwerkraft und/oder die durch den Antrieb erzeugten Schwingungen. Über die Förderrinne werden die Kleinteile nachgeschalteten Einrichtungen zugeführt.

Der komplette Aufbau des Bevorratungssystems ist in Ausgestaltungen derart ausgelegt, dass Einzelteile des Bevorratungssystem, insbesondere produktberührende Einzelteile, der Anforderung für pharmazeutische Einbringung in eine hermetisch abgedichtete Einhausung gemäß Leitfaden über "Die gute Praxis bei der Herstellung von Arzneimitteln" ("The Rules Governing Medicinal Products in the European Union, EU Guidelines for Good Manufacturing Practice for Medicinal Products for Human and Veterinary Use" - EU-GMP-Leitfaden), Annex 1 (zur Zeit: Volume 4 vom 22. August 2022) entsprechen. Die Einhausung hat in Ausgestaltungen eine Schnittstelle, z.B. eine Öffnung mit einem Flansch, beispielsweise einen Alpha-Port eines Alpha-Beta-Portsystems, an der eine andere gasdichte Einhausung, beispielsweise eine Beta-Komponente eines Alpha-Beta-Portsystems, angeschlossen werden kann, in welcher sich Einzelteile des Bevorratungssystem, insbesondere autoklavierte Einzelteile, befinden. Somit ist eine sterile Einbringung in die Einhausung, beispielsweise einer Abfüll- bzw. Verpackungsanlage, insbesondere gemäß EU GMP Annex1 möglich.

Die Einzelteile sind insbesondere in Ausgestaltungen derart dimensioniert, dass sie über eine Schnittstelle in die Einhausung einbringbar sind, wobei eine größte Abmessung eines lichten Querschnitts der Schnittstelle, beispielsweise des Alpha-Ports, kleiner ist als 270 mm. Der lichte Querschnitt ist kreisrund berandet, somit handelt es sich bei der Abmessung um den Durchmesser des Außenrandes des lichten Querschnitts. Zudem kann das Bevorratungssystem in Ausgestaltungen durch einen Manipulator, beispielsweise einen Gelenkarmroboter, insbesondere einen SCARA-Roboter, installiert und/oder gerüstet werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: ein Ausführungsbeispiel eines Bevorratungssystems umfassend eine Vorratsbehälter, eine Förderrinne und eine Sortiereinrichtung in einer perspektivischen Darstellung;
- Fig. 2: das Bevorratungssystems gemäß Fig. 1 in einer Explosionsdarstellung;
- Fig. 3: den Vorratsbehälter und die Sortiereinrichtung des Bevorratungssystems gemäß Fig. 1 in einer geschnittenen Darstellung;
- Fig. 4: die Sortiereinrichtung und die Förderrinne des Bevorratungssystems gemäß Fig. 1 in einer geschnittenen Darstellung;
- Fig. 5: die Sortiereinrichtung und die Förderrinne des Bevorratungssystems gemäß Fig. 1 in einer perspektivischen Darstellung;
- Fig. 6: die Sortiereinrichtung und die Förderrinne des Bevorratungssystems gemäß Fig. 1 in einer perspektivischen Darstellung von unten;
- Fig. 7: die Sortiereinrichtung gemäß Fig. 1 in einer Explosionsdarstellung;
- Fig. 8: ein weiters Ausführungsbeispiel einer Sortiereinrichtung ähnlich Fig. 7 in einer perspektivischen Darstellung.
- Fig. 9: die Sortiereinrichtung gemäß Fig. 8 in einer Explosionsdarstellung.

### DETAILLIERTE BESCHREIBUNG DER AUSFÜHRUNGSBEISPIELE

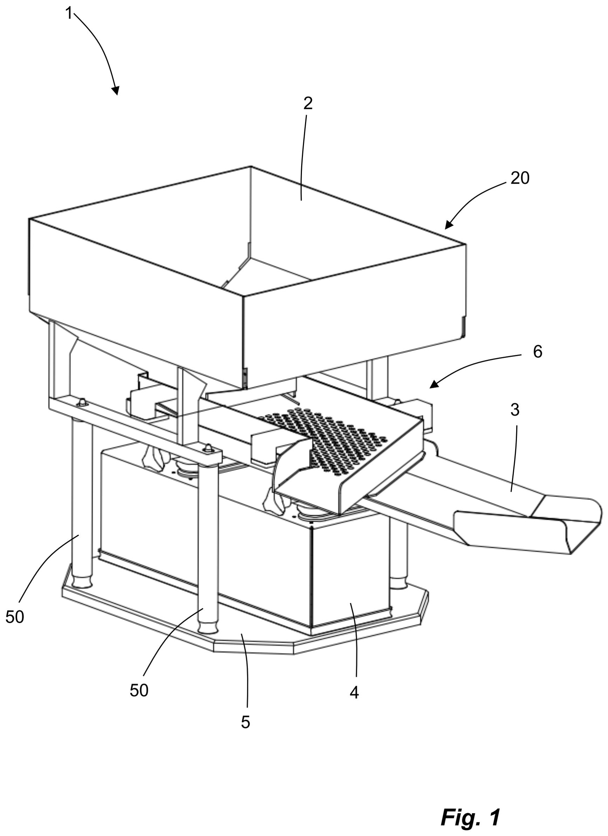

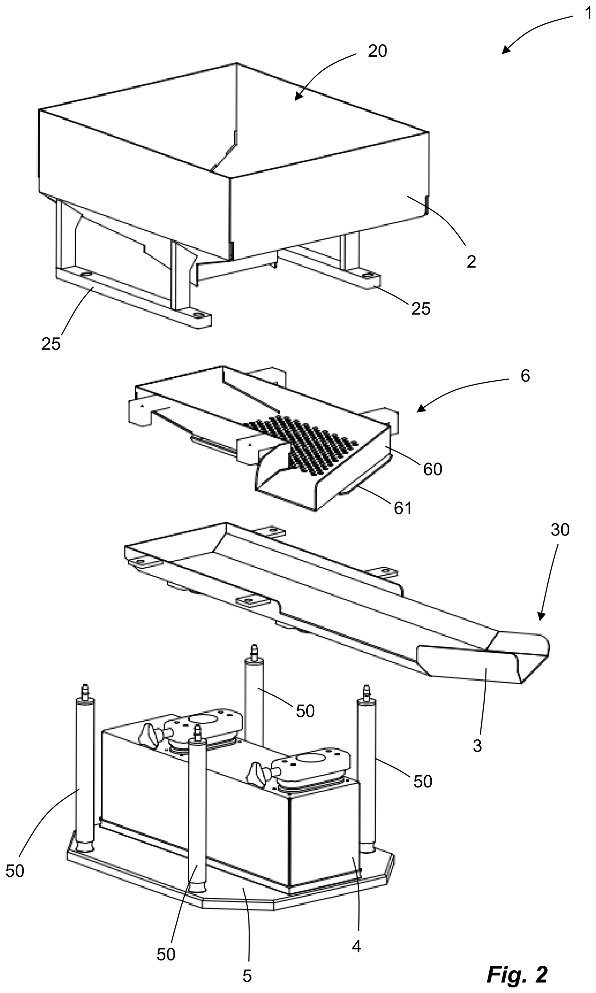

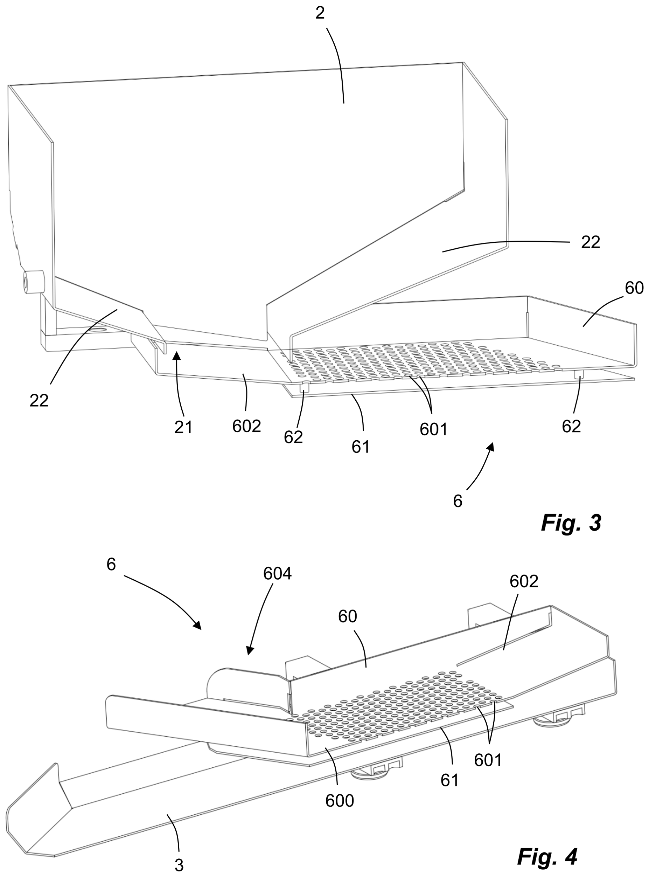

Die Figuren 1 und 2 zeigen schematisch ein Ausführungsbeispiel eines Bevorratungssystems 1 in einer perspektivischen Darstellung bzw. einer Explosionsdarstellung. Fig. 3 bis 7 zeigen Elemente des Bevorratungssystems 1.

Das Bevorratungssystem 1 dient einer Bevorratung und dosierten Abgabe von nicht dargestellten Kleinteilen als Schüttgut. Beispielsweise handelt es sich bei den Kleinteilen um Verschlusselemente, insbesondere Stopfen. Beispielsweise handelt es sich bei den Verschlusselementen um Stopfen für ein Verschließen von pharmazeutischen Behältern, wie Vials, Karpulen, Spritzen oder Ampullen.

Wie in Fig. 1 und 2 dargestellt, umfasst das Bevorratungssystem 1 einen Vorratsbehälter 2 zur Bevorratung der dargestellten Kleinteile als Schüttgut.

Der Vorratsbehälter 2 weist eine Öffnung 20 auf, über welche die Kleinteile in den Vorratsbehälter 2 einbringbar sind. Wie am besten in Fig. 3 erkennbar, weist der Vorratsbehälter 2 an einem in einer üblichen Gebrauchsstellung unten angeordneten Bereich eine Auslassöffnung 21 auf, über welche Kleinteile aus dem Vorratsbehälter 2 abgeführt werden. Wie in Fig. 3 erkennbar, sind Wände 22 des Vorratsbehälters 2 zumindest teilweise geneigt, sodass in dem Vorratsbehälter 2 aufgenommene Kleinteile in Richtung der Auslassöffnung 21 bewegt werden.

Wie in Fig. 1 und 2 dargestellt, umfasst das Bevorratungssystem 1 weiter eine Förderrinne 3 mit einem Auslauf 30. Die Förderrinne 3 ist nachfolgend zu der Auslassöffnung 21 des Vorratsbehälters 2 angeordnet, wobei über die Auslassöffnung 21 aus dem Vorratsbehälter 2 abgeführte Kleinteile durch die Förderrinne 3 in Richtung einer nachfolgenden Einrichtung (nicht dargestellt in den Figuren) bewegt werden. Die nachfolgende Einrichtung ist in Anwendungsfällen eine Einrichtung, für eine Verwendung der Kleinteile. Beispielsweise ist die Einrichtung eine Verschließeinrichtung, in welcher Behälter mit den als Verschlusselementen gestalteten Kleinteilen verschlossen werden. Die nachfolgende Einrichtung ist in Anwendungsfällen eine Fördereinrichtung, mit welcher die Kleinteile weiter in Richtung einer Einrichtung, für eine Verwendung der Kleinteile gefördert werden. Beispielsweise ist die Einrichtung eine Zuführung für lagerichtige Übergabe an weiterführende Abfüll-bzw. Verpackungs-Verschließanlage.

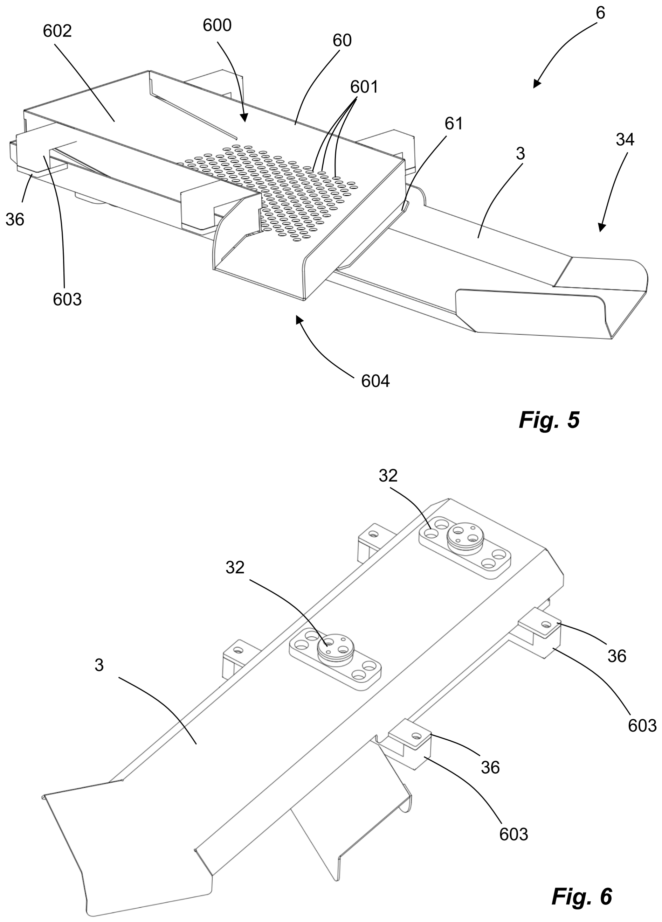

Für eine Bewegung der Kleinteile entlang der Förderrinne 3 in Richtung des Auslaufs 30 ist ein Antrieb 4 vorgesehen. In Ausgestaltungen ist der Antrieb 4 ausgebildet, um Schwingungen zu erzeugen. Die Schwingungen werden auf die Förderrinne 3 übertragen, um die Kleinteile in eine gewünschte Förderrichtung zu bewegen. Insbesondere ist in Ausgestaltungen der Antrieb 4 ausgebildet, um Schwingungen zu erzeugen, durch welche die Kleinteile entlang einer Längsrichtung der Förderrinne 3 bewegt werden. Der Antrieb 4 ist beispielsweise als elektromagnetischer, mechanischer oder pneumatischer Antrieb gestaltet, um die für die Bewegung der Kleinteile erforderlichen Schwingung zu erzeugen. Wie am besten in Fig. 6 erkennbar, sind an einer Unterseite der Förderrinne 3 Kopplungselemente 32 vorgesehen, um die Förderrinne 3 mit dem Antrieb für eine Übertragung der Schwingungen auf die Förderrinne 3 zu koppeln. Ein Koppeln der Förderrinne 3 mit dem Antrieb 4 erfolgt in Ausgestaltungen durch eine werkzeuglose Schraubspannung. Ein Koppeln erfolgt in Ausgestaltungen durch verschiedene andere Spannsysteme z.B. pneumatisch, elektrisch oder per Vakuum.

Der Antrieb 4 ist in Ausgestaltungen an einer Bodenplatte 5 angeordnet. In Ausgestaltungen ragen von der Bodenplatte 5 Säulen 50 ab, wobei der Vorratsbehälter 2 durch die Säulen 50 abgestützt ist. In dem dargestellten Ausführungsbeispiel sind vier Säulen 50 vorgesehen. Der Vorratsbehälter 2 weist eine Stützeinrichtung 25 auf, über welche der Vorratsbehälter 2 an den Säulen 50 abgestützt ist. In Ausgestaltungen ist der Vorratsbehälter 2 einseitig auf den Säulen 50 abgestützt.

Zwischen der Auslassöffnung 21 des Vorratsbehälters 2 und der Förderrinne 3 ist eine Sortiereinrichtung 6 vorgesehen. Die Sortiereinrichtung 6 umfasst in dem dargestellten Ausführungsbeispiel eine Trenneinrichtung 60 und eine als Begrenzungselement 61 ausgebildete Begrenzungseinrichtung.

Die Sortiereinrichtung 6 ist ausgebildet, um aneinander anhaftende Kleinteile voneinander zu trennen und/oder aneinander anhaftenden Kleinteile auszusortieren. Die Sortiereinrichtung 6 ist insbesondere ausgebildet, um aneinander anhaftende Kleinteile stromaufwärts der Förderrinne 3 voneinander zu trennen oder aneinander anhaftenden Kleinteile stromaufwärts der Förderrinne 3 auszusortieren.

In Ausgestaltungen ist die Trenneinrichtung 60, wie beispielsweise in Fig. 4 bis 6 dargestellt, an der Förderrinne 3 befestigt. Die Trenneinrichtung 60 ist insbesondere derart an der Förderrinne 3 befestigt, dass die Trenneinrichtung 60 mit der Förderrinne 3 bewegt wird. Beispielsweise weisen die Trenneinrichtung 60 und die Förderrinne 3 jeweils in Längsrichtung der Förderrinne betrachtet seitlich abragende Laschen 36, 603 auf. In dem dargestellten Ausführungsbeispiel ist die Trenneinrichtung 60 mit der Förderrinne 3 verschraubt. Beispielsweise weisen die Laschen 36 der Förderrinne 3 Durchgangsbohrungen auf, durch welche in den Figuren nicht dargestellte Schrauben eingeführt werden können, welche in Schraubkanäle an den Laschen 603 der Trenneinrichtung 60 eingeschraubt werden können. Beispielsweise weisen die Trenneinrichtung 60 und die Förderrinne 3 jeweils vier in Längsrichtung der Förderrinne 3 betrachtet seitlich abragende Laschen 36, 603 auf.

Die Trenneinrichtung 60 ist als Rinne gestaltet. Die Trenneinrichtung 60 weist eine Förderfläche 600 auf. In der Ausgestaltung gemäß den Fig. 1 bis 7 weist die Förderfläche eine Vielzahl von Durchgangsöffnungen 601 auf. Eine Anzahl, Anordnung und/oder Dimensionierung der Durchgangsöffnungen ist insbesondere entsprechend der zu sortierende Kleinteilen geeignet wählbar.

In der Ausgestaltung gemäß Fig. 1 bis 7 sind die Durchgangsöffnungen 601 geeignet dimensioniert, um aneinander anhaftende Kleinteile, insbesondere Verschlusselemente, beispielsweise Stopfen, zurückzuhalten. Die Durchgangsöffnungen 601 sind insbesondere dimensioniert, sodass vereinzelte Kleinteile, insbesondere Verschlusselemente, beispielsweise Stopfen, die Durchgangsöffnungen passieren können.

Die Trenneinrichtung 60 wird in Ausgestaltungen zu Schwingungen angeregt, beispielsweise werden Schwingungen der Förderrinne 3 auf die Trenneinrichtung 60 übertragen. Die Bewegung der Trenneinrichtung 60 bewirkt eine Bewegung der Kleinteile entlang der Trenneinrichtung in Förderrichtung der Förderrinne 3. Die Bewegung der Trenneinrichtung bewirkt in Ausgestaltungen auch ein Lösen aneinander anhaftender Kleinteile.

Die Trenneinrichtung 60 weist einen Schlechtauslauf 604 auf. Kleinteile, welche nicht die Durchgangsöffnungen 601 passieren, werden zu dem Schlechtauslauf 604 bewegt. In Ausgestaltungen werden Kleinteile, welche nicht die Durchgangsöffnungen 601 passieren, dauerhaft aus einem Prozessbetrieb entfernt. In Ausgestaltungen werden Kleinteile, welche nicht die Durchgangsöffnungen 601 passieren, einem separaten Auffangbehälter zurückgeführt. In Ausgestaltungen werden Kleinteile, welche nicht die Durchgangsöffnungen 601 passieren, zu dem Vorratsbehälter 2 zurückgeführt.

Der Schlechtauslauf 604 ist in Ausgestaltungen quer, beispielsweise in einem Winkel von ca. 45° bis ca. 95°, zu einer Längsrichtung der Förderrinne 3 angeordnet. In anderen Ausgestaltungen ist der Schlechtauslauf 604 parallel zu der Förderrinne 3 angeordnet. Beispielsweise sind der Schlechtauslauf 604 und die Förderrinne 3 in unterschiedlichen Ebenen angeordnet.

Die Trenneinrichtung 60 ist als Rinne gestaltet und weist an den gegenüberliegenden Längsseiten jeweils nach oben abragende Führungsflächen auf. Die Führungsflächen verhindern ein seitliches Herunterfallen der Kleinteile von der Trenneinrichtung 60, um einen Transport aussortierter Kleinteile in Richtung des Schlechtauslaufs 604 sicherzustellen.

In dem dargestellten Ausführungsbeispiel weist die Trenneinrichtung 60 einen Einlauf 602 auf. Eine Fläche des Einlaufs 602 ist gegenüber der Förderfläche 600 geneigt, sodass der Einlauf 602 eine Rutsche bildet, durch welche Kleinteile zu der Förderfläche 600 gefördert werden. Der Einlauf weist in Ausgestaltungen keine Durchgangsöffnungen 601 auf.

Wie am besten in Fig. 3 bis 5 erkennbar, ist in dem dargestellten Ausführungsbeispiel das Begrenzungselement 61 zwischen der Förderrinne 3 und der Trenneinrichtung 60 angeordnet. Zwischen der Trenneinrichtung 60 und dem Begrenzungselement 61 sind Distanzstücke 62 angeordnet. Das Begrenzungselement 61 ist mittels der Distanzstücke 62 in einem definierten Abstand unterhalb der Trenneinrichtung 60 angeordnet, sodass zwischen der Trenneinrichtung 60 und dem Begrenzungselement 61 ein Spalt gebildet wird. Eine Höhe des Spalts ist derart gewählt, dass nur vereinzelte Kleinteile den Spalt passieren können und somit aneinander haftende Teile getrennt werden.

Aneinander anhaftende Kleinteile, welche in eine Durchgangsöffnung 601 der Trenneinrichtung 60 gelangen, bleiben in den Durchgangsöffnungen 601 stecken. In den Durchgangsöffnungen 601 steckengebliebene Kleinteile werden dabei durch Kräfte, welche durch nachfolgende Kleinteile auf die steckengebliebene Kleinteile aufgebracht werden, voneinander getrennt. **In** dem dargestellten Ausführungsbeispiel ist eine Länge des Begrenzungselements 61 derart gewählt, dass sich das Begrenzungselement 61 unterhalb der Förderfläche 600 erstreckt. In dem dargestellten Ausführungsbeispiel ist eine Länge des Begrenzungselements 61 derart gewählt, dass sich das Begrenzungselement 61 nicht unterhalb des Einlaufs 602 erstreckt. Bei einer Stauung in dem Spalt zwischen dem Begrenzungselement 61 und der Trenneinrichtung 60 können Kleinteile dabei auch entgegen der Förderrichtung der Förderrinne 3 bewegt werden und an einem in Förderrichtung der Förderrinne 3 betrachtet hinteren Ende des Begrenzungselements 61 auf die Förderrinne 3 fallen.

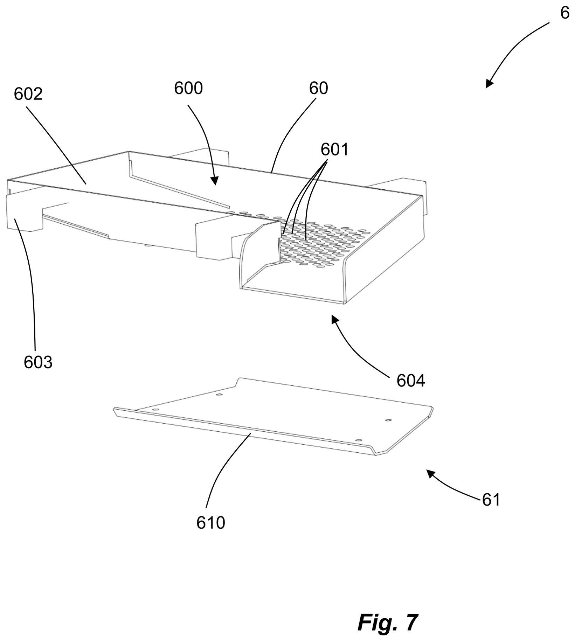

Die Begrenzungseinrichtung 61 ist in Ausgestaltung als Platte gestaltet. **In** anderen Ausgestaltungen ist die Begrenzungseinrichtung 61, wie schematisch in Fig. 7 dargestellt, als Rinne gestaltet und weist an den gegenüberliegenden Längsseiten jeweils eine in Richtung der Trenneinrichtung 60 abragende Führungsfläche 610 auf. Die Führungsflächen 610 verhindern ein seitliches Herunterfallen der Kleinteile von der Begrenzungseinrichtung 61.

In Ausgestaltungen ist kein separates Begrenzungselement 61 vorgesehen, wobei insbesondere die Trenneinrichtung 60 und die Förderrinne 3 derart angeordnet sind, dass ein Spalt gebildet wird. Die Förderrinne 3 fungiert dabei als Begrenzungselement. Der Spalt ist dabei in Ausgestaltungen derart dimensioniert, dass nach Möglichkeit nur vereinzelte Kleinteile den Spalt passieren können.

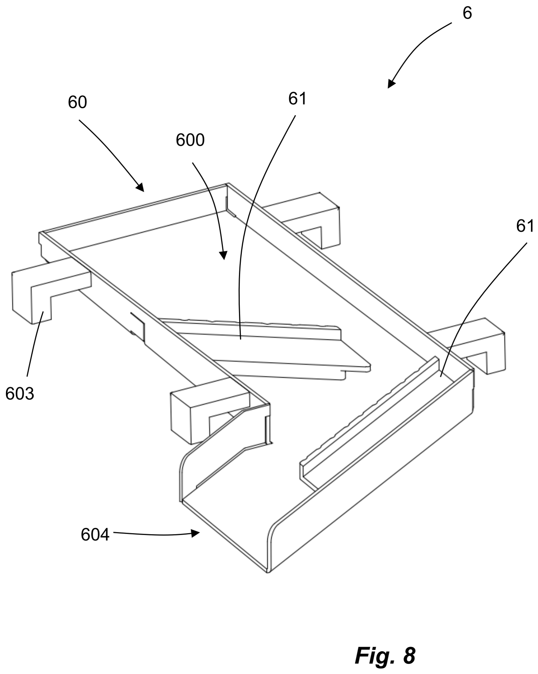

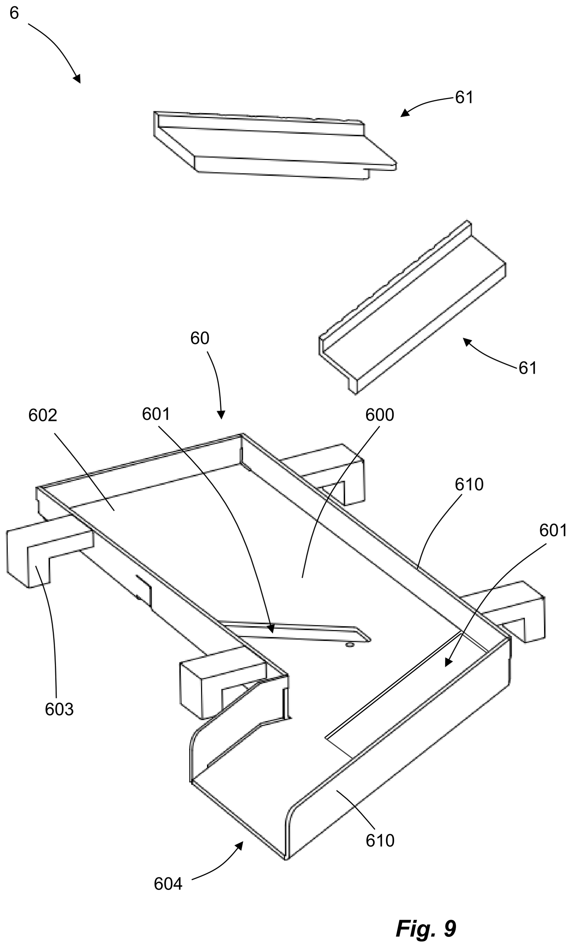

Fig. 8 und 9 zeigen ein weiters Ausführungsbeispiel einer Sortiereinrichtung 6 ähnlich der Sortiereinrichtung 6 gemäß den Fig. 1 bis 7 in einer perspektivischen Darstellung und einer Explosionsdarstellung. Die in den Fig. 1 bis 7 dargestellte Sortiereinrichtung 6 ist beispielsweise für eine Formatanpassung durch die Sortiereinrichtung 6 gemäß den Fig. 8 und 9 austauschbar. Die Sortiereinrichtung 6 ist zwischen einem Vorratsbehälter 2 und einer Förderrinne eines Bevorratungssystems 1 (vgl. Fig. 1 und 2) anbringbar.

Die in Fig. 8 und 9 dargestellte Sortiereinrichtung 6 umfasst eine Trenneinrichtung 60 mit einer Förderfläche 600 und zwei oberhalb der Förderfläche 600 der Trenneinrichtung 60 angeordnete Begrenzungselemente 61.

Wie in Fig. 9 erkennbar, weist die Förderfläche 600 der Trenneinrichtung 60 bei dem Ausführungsbeispiel gemäß den Fig. 8 und 9 zwei Durchgangsöffnungen 601 auf, wobei entlang der Förderfläche 600 geförderte Kleinteile über die Durchgangsöffnungen 601 zu der Förderrinne 3 (vgl. Fig. 1 und 2) gelangen können. Kleinteile, welche nicht die Durchgangsöffnungen 601 passieren, werden zu einem Schlechtauslauf 604 gefördert.

Die Begrenzungseinrichtungen 61 sind oberhalb der Förderfläche 600 angeordnet. Die Begrenzungseinrichtungen 61 sind insbesondere and der Trenneinrichtung 60 montiert. Insbesondere sind die Begrenzungseinrichtungen 61 werkzeuglose an der Trenneinrichtung 60 montiert. Die Begrenzungseinrichtungen 61 begrenzen jeweils mit der Trenneinrichtung 60 einen Spalt. Die Begrenzungseinrichtungen 61 sind jeweils einer Durchgangsöffnung 601 zugeordnet. Die Begrenzungseinrichtungen 61 decken jeweils eine Durchgangsöffnung 601 ab, sodass Kleinteile nur über einen zwischen der Begrenzungseinrichtung 61 und der Trenneinrichtung 60 gebildeten Spalt zu der Durchgangsöffnung 601 gelangen können.

Nicht vereinzelte, beispielsweise verklebte, Kleinteile können den Spalt nicht passieren und werden zurückgehalten. In Ausgestaltungen wird durch nachfolgende Kleinteile eine Kraft auf zurückgehaltene, verklebte Kleinteile aufgebracht, welche eine Trennung verklebter Kleinteile für ein Passieren des Spalts bewirkt.

In Ausgestaltungen ist wie in Fig. 8 und 9 eine Breite zumindest einer der Begrenzungseinrichtungen 61, insbesondere der stromaufwärts einer in Förderrichtung endseitigen Führungsfläche 610 angeordneten ersten Begrenzungseinrichtung 61, quer zu einer Förderrichtung der Kleinteile kleiner ist als eine Breite der Trenneinrichtung 60. Kleinteile, welche den durch die erste Begrenzungseinrichtung 61 gebildeten Spalt nicht passieren, können so die erste Begrenzungseinrichtung 61 seitlich passieren. Kleinteile, welche die erste Begrenzungseinrichtung 61 seitlich passieren, gelangen nicht zu einer durch die Begrenzungseinrichtung 61 abgedeckten Durchgangsöffnung 602 der Trenneinrichtung 60.

In Ausgestaltungen weist die Trenneinrichtung 60, wie in Fig. 8 und 9, dargestellt mindestens eine weitere Durchgangsöffnung 601 auf, wobei der weiteren Durchgangsöffnung 601 eine weitere Begrenzungseinrichtung 61 zugeordnet ist. Kleinteile, welche keinen durch eine der Begrenzungseinrichtung 61 gebildeten Spalt passieren, gelangen nicht zu einer Durchgangsöffnung 601. Diese Kleinteile werden in dem dargestellten Ausführungsbeispiel zu dem Schlechtauslauf 604 gefördert.

Produktberührende Abschnitte des Bevorratungssystems 1, insbesondere der Vorratsbehälter 2, die Förderrinne 3 und/oder Elemente der Sortiereinrichtung 6 weisen in Ausgestaltungen elektropolierten Oberflächen, insbesondere für eine Verwendung von Kleinteilen für die pharmazeutische Zwecke, insbesondere gemäß Richtlinie der "Food and Drug Administration" (FDA- Richtlinien) auf. Für weniger anforderungsintensive Anwendungsbereiche weisen einige oder alle Produktberührende Abschnitte des Bevorratungssystems 1 glasperlen-gestrahlte Oberfläche auf.

### Bezugszeichenliste

- 1: Bevorratungssystem
- 2: Vorratsbehälter
- 3: Förderrinne
- 4: Antrieb
- 5: Bodenplatte
- 6: Sortiereinrichtung
- 20: Öffnung
- 21: Auslassöffnung
- 22: Wand
- 25: Stützeinrichtung
- 30: Auslauf
- 32: Kopplungselement
- 36: Lasche
- 50: Säule
- 60: Trenneinrichtung
- 61: Begrenzungselement, Begrenzungseinrichtung
- 62: Distanzstück
- 600: Förderfläche
- 601: Durchgangsöffnung
- 602: Einlauf
- 603: Lasche
- 604: Schlechtauslauf
- 610: Führungsfläche

## Patentansprüche

1. Sortiereinrichtung (6) für ein Bevorratungssystem (1) für Kleinteile, insbesondere für Verschlusselemente, wobei die Sortiereinrichtung (6) ausgebildet ist, um aneinander anhaftende Kleinteile voneinander zu trennen und/oder aneinander anhaftenden Kleinteile auszusortieren.

2. Sortiereinrichtung (6) nach Anspruch 1, **dadurch gekennzeichnet, dass** die Sortiereinrichtung (6) eine Begrenzungseinrichtung (61) umfasst, wobei die Begrenzungseinrichtung (61) einen Spalt begrenzt, wobei insbesondere der Spalt dimensioniert ist, um ein Eintreten vereinzelter Kleinteile, insbesondere Verschlusselemente, beispielsweise Stopfen, in den Spalt zu erlauben und/oder um ein Eintreten aneinander anhaftender Kleinteile, insbesondere Verschlusselemente, beispielsweise Stopfen, zu verhindern.

3. Sortiereinrichtung (6) nach Anspruch 1 oder 2, **dadurch gekennzeichnet, dass** die Sortiereinrichtung (6) eine Trenneinrichtung (60) aufweist, wobei die Trenneinrichtung (60) mindestens eine Durchgangsöffnung (601) aufweist, beispielsweise mindesten zwei Durchgangsöffnungen (601), insbesondere eine Vielzahl an Durchgangsöffnungen (601).

4. Sortiereinrichtung (6) nach Anspruch 3, **dadurch gekennzeichnet, dass** die Durchgangsöffnungen (601) dimensioniert sind, um ein Passieren vereinzelter Kleinteile, insbesondere Verschlusselemente, beispielsweise Stopfen, zu erlauben und/oder um aneinander anhaftende Kleinteile, insbesondere Verschlusselemente, beispielsweise Stopfen, voneinander zu trennen und/oder aneinander anhaftenden Kleinteile insbesondere Verschlusselemente, beispielsweise Stopfen, zurückzuhalten.

5. Sortiereinrichtung (6) nach Anspruch 3 oder 4, **dadurch gekennzeichnet, dass** die Trenneinrichtung (60) eine die mindestens eine Durchgangsöffnung (601) aufweisende Förderfläche (600), aufweist, wobei die Trenneinrichtung (60) insbesondere einen in Fördereinrichtung stromaufwärts der mindestens einen Durchgangsöffnung angeordneten Einlauf (602) aufweist, wobei insbesondere der Einlauf (602) in einem Winkel zu der Förderfläche (600) angeordnet ist und eine Rutsche zu der Förderfläche (600) bildet.

6. Sortiereinrichtung (6) nach einem der Ansprüche 1 bis 5, **dadurch gekennzeichnet, dass** die Begrenzungseinrichtung (61) in einer Gebrauchsausrichtung der Sortiereinrichtung (6) unterhalb der Trenneinrichtung (60) angeordnet ist.

7. Sortiereinrichtung (6) nach einem der Ansprüche 1 bis 6, **dadurch gekennzeichnet, dass** die Begrenzungseinrichtung (61) in einer Gebrauchsausrichtung der Sortiereinrichtung (6) oberhalb der Trenneinrichtung (60) angeordnet ist, wobei insbesondere eine Breite der Begrenzungseinrichtung (61) quer zu einer Förderrichtung der Kleinteile kleiner ist als eine Breite der Trenneinrichtung (60).

8. Sortiereinrichtung (6) nach einem der Ansprüche 1 bis 7, **dadurch gekennzeichnet, dass** die Trenneinrichtung (60) einen Schlechtauslauf (604) aufweist, wobei insbesondere ein Schlechtauslauf (604) quer zu einer Förderrichtung der Kleinteile entlang der Trenneinrichtung (60) angeordnet ist.

9. Bevorratungssystem (1) für Kleinteile, insbesondere für Verschlusselemente, mit mindestens einer Sortiereinrichtung (6) nach einem der Ansprüche 1 bis 8.

10. Bevorratungssystem (1) für Kleinteile nach Anspruch 9, **dadurch gekennzeichnet, dass** das Bevorratungssystem (1) einen Vorratsbehälter (2) und eine Förderrinne (3) umfasst, wobei die Sortiereinrichtung (6) in Förderrichtung der Förderrinne (3) zwischen dem Vorratsbehälter (2) und der Förderrinne (3) angeordnet ist, wobei insbesondere die Sortiereinrichtung (6) in einer Gebrauchsausrichtung oberhalb der Förderinne (3) angeordnet ist.

11. Bevorratungssystem (1) für Kleinteile nach Anspruch 10, **dadurch gekennzeichnet, dass** die Sortiereinrichtung (6) an der Förderrinne (3) angebracht ist.

12. Bevorratungssystem (1) für Kleinteile nach Anspruch 10 oder 11, **dadurch gekennzeichnet, dass**
die Sortiereinrichtung (6) eine Trenneinrichtung (60) und eine
Begrenzungseinrichtung (61) umfasst, wobei insbesondere die Begrenzungseinrichtung (61) zwischen der Trenneinrichtung (60) und der Förderrinne (3) angeordnet ist, und/oder die Begrenzungseinrichtung (61) an einer von der Förderrinne (3) abgewandten Seite der Trenneinrichtung (60) angeordnet ist.
